# EUROPEAN PATENT APPLICATION

(11) **EP 1 101 895 A2**
(43) Date of publication of application: **23.05.2001**
(21) Application number: 00310157.3
(22) Date of filing: 15.11.2000
(51) Int. Cl.: E06B 3/66, B60J 1/00, B61D 25/00

(54) **Emergency exit comprising a multiple glazed window**

(30) Priority: 19.11.1999 GB 9927269
(71) Applicant: PILKINGTON UNITED KINGDOM LIMITED, St. Helens, Merseyside WA10 3TT (GB)
(72) Inventor: Smith, Gareth Ian, Oakwood, Derby DE21 2ES (GB)
(74) Representative: Halliwell, Anthony Charles

(57) **Abstract**

An emergency exit for a vehicle or building is disclosed, comprising a multiple, e.g. double, glazed window (1, 41, 61)and an explosive fracturing means (30, 40, 60) for fracturing the window in an emergency. The window includes at least one pane (2, 42, 62) of tempered glass and a further pane (3, 43, 63) of glass, and the fracturing means is arranged to fracture both panes. Preferably the fracturing means comprises two explosively driven impacting devices (31, 48, 68), which are positioned in opposed relationship between the panes. The devices may be remotely actuated, e.g. electrically, and may be connected to a trigger system (35) which actuates fracture e.g. on deceleration or impact (in the case of a vehicle) or on detection of a fire. Preferably the fracturing means is compact, positioned adjacent a comer of the window, and concealed from external view.

## Description

The present invention relates to an emergency exit comprising a multiple glazed window, and more particularly to such a window comprising at least one pane of tempered glass. In the event of an emergency, the window is fractured to facilitate escape.

As is generally known in the art, tempered glass (also known as toughened glass) is subjected during its manufacture to rapid chilling (generally referred to as quenching), which causes permanent stresses to be developed in the glass. The surfaces of the glass are put into compression, which inhibits the propagation of cracks, and, in effect, makes the glass generally less prone to breakage in everyday use. However, the surface compressive forces are balanced by tensile forces in the centre of the thickness of the glass. A considerable amount of energy is stored in these opposed forces, and should a crack penetrate the surface compressive layer and enter the tensile core, it will divide and propagate spontaneously, leading to complete disintegration of the pane. However, when it is desirable to break the pane (as in the case of a window serving as an emergency exit) it is difficult to cause a crack to penetrate the compressive layer unless a suitably sharp implement is available.

It is known to provide a pointed hammer, or other suitable implement for fracturing glass, in the vicinity of a window or door comprising a pane of tempered glass, which is to serve as an emergency exit. Unfortunately, not only are such implements subject to loss or theft, but they may also be misused, e.g. the pane may be broken in an act of vandalism. Conversely, in a genuine emergency, it may be difficult for a person of less than average strength (e.g. an elderly or disabled person) to succeed in breaking the glass. Furthermore, the window may not be within easy reach, as in case of a stairwell of a building, or a railway carriage lying on its side after an accident, for instance.

FR 1,436,815 describes a tempered safety windscreen in an automobile, the destruction of which may be effected by the detonation of a device incorporating an explosive charge. However, according to GB 1,329,505, there are numerous problems with this arrangement, in particular regarding the fixing of the device adjacent the windscreen.

GB 1,329,505 itself also relates to a tempered glass sheet incorporating an explosive destruction device. A device containing an explosive charge and a pin is disposed in a cylindrical hole in the tempered sheet. On provision of an electrical impulse, the charge is detonated and the pin is thereby driven into the wall of the hole, i.e. into the edge of the glass sheet, fracturing the sheet.

However, the need to provide a hole in the sheet is a major disadvantage, because the presence of a hole in a tempered glass sheet necessarily results in a distorted stress pattern with consequent weakening of the sheet. Also, manufacture of sheets containing holes is complicated by the additional step of drilling the glass blank, and losses during the tempering process are inevitably increased because of the hole.

Moreover, modem vehicles and buildings frequently have multiple glazing, especially double glazing, and so there is increasingly a need to use a double glazed window as an emergency exit. It will be appreciated that in an emergency situation, should additional time be required to break a second pane of glass using known techniques, this may make the difference between a successful and a failed escape attempt. Furthermore, where the double glazing is in the form of a sealed unit, it is generally more difficult to break the first pane because it is supported by the second pane via the sealed air space.

GB 2 263 930 A discloses a safety device for use on a double glazed window, and in one embodiment, the device may incorporate a small explosive charge. However, the device is only intended to break one of the two panes of glass, and the problem of fracturing a tempered pane of glass is not addressed. There remains a need for a way of employing a multiple glazed window including a pane of tempered glass as an emergency exit without resorting to drilling holes in the glass.

According to the present invention there is provided an emergency exit comprising a double glazed window and an explosively driven fracturing means, characterised in that the window includes at least one pane of tempered glass and a further pane of glass, wherein the fracturing means is arranged to fracture both panes of glass. A fracturing means driven by an explosive source of energy has the advantage that sufficient energy can be stored to fracture a tempered pane of glass, bearing in mind its greater strength in comparison with an ordinary annealed pane; moreover, the energy is stored in concentrated manner, allowing a compact device, and yet the energy may be released suddenly and rapidly when it is required to break the window in an emergency.

Preferably, the fracturing process is remotely actuated by transmission of an electrical actuating signal to the fracturing means, and both panes of glass are fractured as the result of a single actuation. Electrical actuation permits a wide variety of control possibilities, such as automatic actuation in the event of an emergency, and allows convenient positioning of the controls, whether actuation is automatic or manual. Clearly it is desirable that both panes should be fractured as a result of a single actuation, for vital seconds may be lost if, having broken the first pane, the second pane has to be broken in a separate operation, whether it be entirely manual, or a further actuation of an explosively driven system.

Advantageously, the fracturing means is positioned between the two panes of glass of the double glazed unit, and is arranged to fracture both panes substantially simultaneously.

An emergency exit according to the invention may be fitted in a window or door of a building or a vehicle. In the latter case, the vehicle may be a railway passenger carriage, or a road vehicle such as a passenger coach or bus, or indeed a ship or boat.

The invention also includes a double glazed unit for use as an emergency exit as described herein.

The invention will now be further described by way of the following specific embodiments, which are given by way of illustration and not of limitation, and with reference to the accompanying drawings in which:-
Fig. 1 is a side view of a window which may serve as an emergency exit in accordance with the invention;
Fig. 2a is an enlargement of a detail of Fig. 1;
Fig. 2b is a view of a detail of an alternative embodiment of the window, the view corresponding to that of Fig. 2a;
Fig. 3 is a partial cross-section of part of the window, the cross-section having been taken on line III-III of Fig. 2a;
Fig. 4 is a further partial cross-section of part of the window, the cross-section having been taken on line IV-IV of Fig. 2a;
Fig. 5 is a partial cross-section of part of a window according to a further embodiment of the invention, the view corresponding to that of Fig. 3;
Fig. 6 is a cross-section of part of a window according to a yet further embodiment of the invention, the view corresponding to that of Fig. 5.

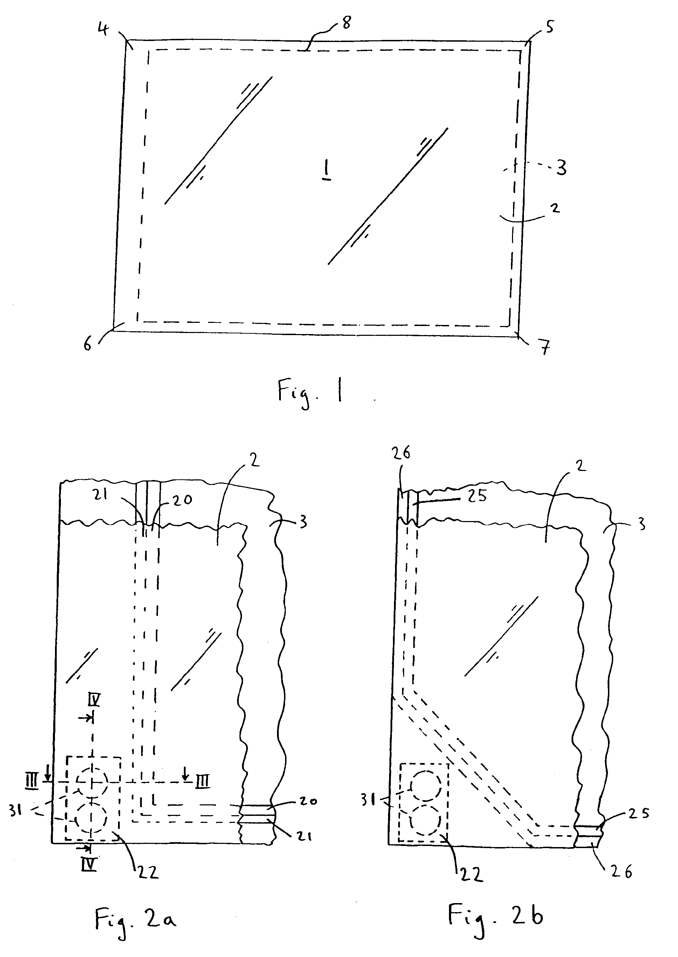

Referring to Fig. 1, a double glazed window 1 is shown comprising panes 2,3 of tempered glass which are maintained in spaced relationship by a peripheral spacing/sealing arrangement. The thickness of the panes of glass depends on the application, with 6 mm glass being common for railway carriage windows, 4, 6, 8 or even 10 mm being used in buildings, depending on the size of window, and 3 or 4 mm being preferred for road vehicles. While only one of the panes need be of tempered glass in certain applications, where the window is subject to a requirement for safety glass (as in the case of a vehicle), both panes are tempered. The inwardmost edge of the spacing/sealing arrangement is denoted by reference numeral 8, and the window has corners 4,5,6,7. The peripheral part of the window outward of line 8 is normally concealed from view, e.g. by a frame, after installation of the window. It is preferred to position the fracturing means adjacent an edge of the window, preferably adjacent a corner of the window. Preferably the fracturing means is wholly inboard of the edge of the window as shown in Figures 2a and 2b, as this ensures reliable fracture, but a position partially outboard of the edge is also possible.

Figure 2a shows the corner 6 of the window in more detail. The spacing/sealing arrangement of the window comprises a spacer 20, which may be any conventional spacer, e.g. an aluminium spacer, and a seal 21, which again may be any of the sealing materials commonly used to seal double glazed units, e.g. silicone or polysulphide. Normally the seal lies immediately adjacent or close to the edges of the panes of a double glazed window, but in this instance the seal and spacer are inwardly displaced (i.e. towards the centre of the window) from one edge, to leave space between the panes on the outward side of the seal for a means of fracturing the glass. The outline of a metal plate 22 is shown, the plate being used to mount the fracturing means.

Figure 2b shows an alternative way of providing space for the fracturing means. In this embodiment, instead of inwardly displacing the spacing/sealing arrangement along the whole length of one side while keeping it parallel to that side, spacer 25 is bent so as to extend at an angle to the edges of the panes in the corner. In this way, a generally triangular area is made available between the panes of glass at the corner. Sealant 26 is applied to suit the line of the spacer 25. Other aspects of this embodiment are the same as the previous embodiment described. While Figures 2a and 2b relate to the corner 6 of the window 1, space for a fracturing means could be provided at any corner of the window, or, in the Figure 2a embodiment, along any edge.

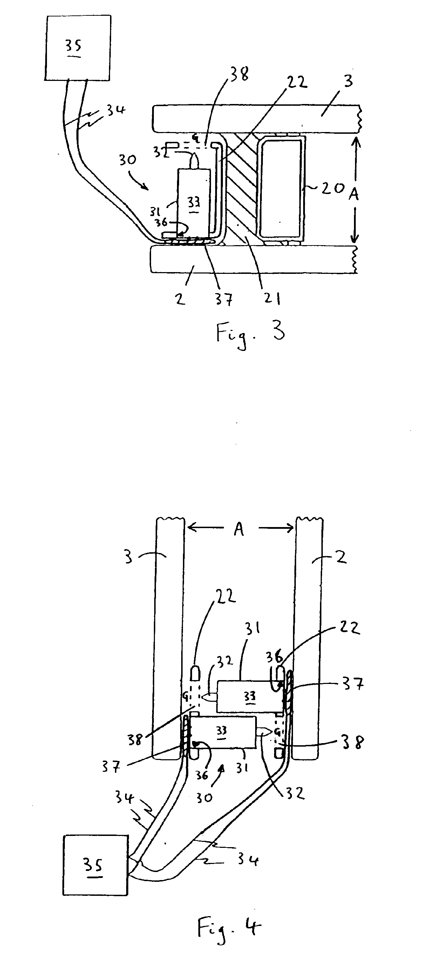

Fig. 3 is a partial cross-section taken on the line III-III in Fig. 2a. Panes 2,3, spacer 20 and seal 21 are shown. A fracturing means, generally designated by reference numeral 30, in the form of an explosive impacting device 31, is positioned adjacent the edges of panes 2,3, thus ensuring it is concealed from view after installation. As mentioned above, it is preferred to situate the fracturing means adjacent an edge or in a corner of the window to ensure reliable fracture. This is because the distribution of stresses in a tempered glass sheet is such that it is easier to penetrate the surface compressive layer at a point adjacent an edge or in a corner of the sheet.

The impacting device 31 comprises a piston 32 (of which only the tip is visible) and cylinder 33, the cylinder containing an explosive charge which, on detonation, causes the piston to extend from the cylinder. The piston thereby impacts on the adjacent pane of glass, penetrating the compressive surface layer and causing the glass to shatter. Preferably the tip of the piston is pointed, and is made from a material, e.g. stainless steel, which is sufficiently hard to avoid instantaneous blunting on impact with the glass. It is important to position the impacting device 31 so as to leave a gap of a few millimetres (denoted by letter G) between the tip of the piston in its retracted position and the glass. This allows the piston to accelerate before impact with the glass.

A suitable impacting device is electrically actuated. Wires 34 extend from an electrical trigger system 35 into the cylinder 33, where they are connected to a fuse which detonates the explosive charge on receipt of an actuating signal from the trigger system. A suitable impacting device is available from the METRON^{TM} range sold by ICI Nobel Enterprises of Ardeer site, Stevenston, Ayrshire, KA20 3LB, Scotland, UK. To ensure reliability and longevity, sealing the cylinder may be facilitated by housing the entire piston 32 (including its tip) of the impacting device within the cylinder. The end of the cylinder adjacent the tip comprises a thin sheet of metal, e.g. brass, which is easily perforated by the tip on detonation of the device.

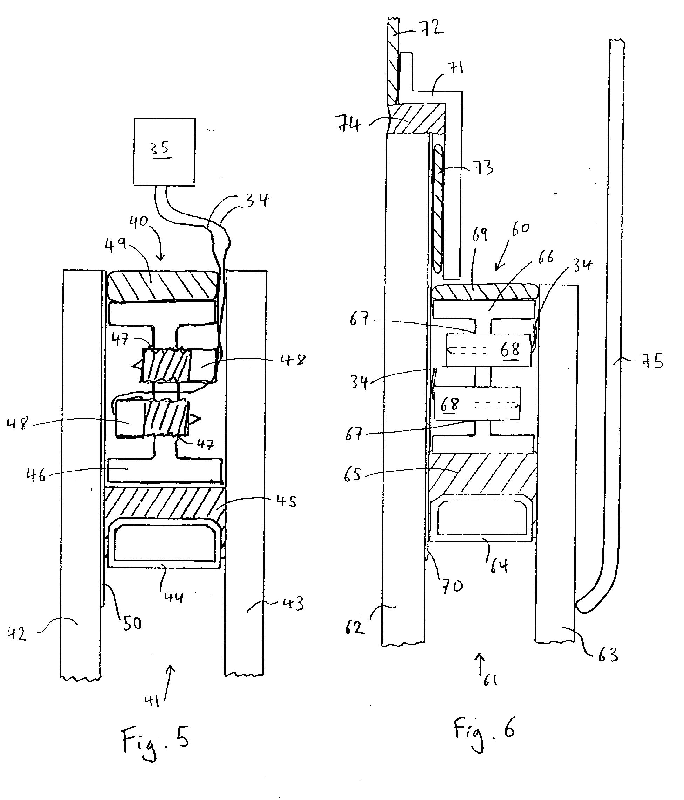

Although only one impacting device 31 is shown in Fig. 3 because of the line of cross section, two identical impacting devices are in fact employed in this embodiment. Fig. 4 is a cross section on line IV-IV in Fig. 2a, and hence shows both impacting devices, which are arranged in opposed relationship. If the panes 2,3 of glass differ from each other, e.g. in thickness or stress level, it may be appropriate to employ dissimilar impacting devices, the characteristics of each impacting device being chosen to suit the properties of the pane of glass it is intended to fracture. If available, a double headed impacting device with pistons extending from both ends of the cylinder would be suitable; this could in effect comprise two cylinders mounted end-to-end.

The impacting device(s) may be mounted adhesively or mechanically, or by a combination of the two. Preferably the devices are attached to the window, e.g. to one or both of the panes, and/or to the spacer, so that the devices are an integral part of the unit. Thus, a substantially self-contained unit is provided which is easy to install, it merely being necessary to connect the actuating wires 34 to the trigger system. A preferred way of mounting the devices is by means of a metal plate 22 which is then bonded in place between the panes. Apertures 36 are provided in the plate to receive the cylinders 33 of the impacting devices. The ends of the cylinders and the apertures may be threaded so that the cylinders screw into the apertures, or the cylinders may be provided with an end cap of greater diameter than the main body of the cylinder, thereby preventing the impacting device from passing wholly through the aperture, and locating the cylinder after the metal plate has been bonded in place. The metal plate is bonded to the panes by blobs 37 of a suitable adhesive, through which the wires 34 pass to make connection to the impacting devices. One group of suitable adhesives is simply the sealants used to form seals 21, 26. Depending on the design of the plate, it may be necessary to provide further apertures 38 through which the pistons 32 pass on actuation of the devices, so that it is indeed possible for the pistons to impact the glass.

The spacing of panes 2,3 is denoted by arrow A and is commonly referred to as the "air gap". Clearly, the impacting devices need to fit within the space provided between the panes, while still leaving gap G for acceleration of the piston. However, it is possible to produce very compact impacting devices, allowing spacings in the range 15 mm to 25 mm. For example, ICI Nobel Enterprises supply an impacting device which measures 20 mm in length and 7 mm in diameter, and is suitable for a unit in which the panes are spaced 22mm apart. This results in double glazed windows which are slim enough to be accommodated in the usual frames employed in buildings and vehicles. With the use of such compact impacting devices, it is possible to arrange for the fracturing means to have a maximum dimension of less than 40 mm, preferably less than 30 mm. This dimension of the fracturing means normally extends parallel to the panes of the window, perpendicular to arrow A in Fig. 4. The dimension of the fracturing means in the direction parallel to arrow A is normally slightly less than the values for the spacing of the panes given above, so that the fracturing means is a sliding fit between the panes.

Fig. 5 shows a further embodiment of the invention, in which an alternative form of metal bracket is used to mount the impacting devices, and further provision is made to conceal the fracturing means 40 from external view. A partial cross-section of a double glazed unit 41 is shown, comprising external pane 42 (i.e. facing the exterior of the vehicle or building) and internal pane 43. The spacer 44 and seal 45 are similar to the spacers and seals described earlier, and may be arranged in either of the configurations previously described.

In this embodiment, the impacting devices are mounted in a bracket 46 which has a cross-section akin to a capital letter "I", when viewed in the direction of view of Fig. 5. The bracket may be machined from a readily workable corrosion-resistant metal such as brass or aluminium, and is provided with circular apertures 47 to receive the impacting devices 48. As mentioned above, the apertures and impacting devices may be threaded so that the devices engage securely in the apertures. An alternative method of securing the devices is, as before, to select the aperture size so that the device is a tight sliding fit in the aperture, and provide a shoulder on the body of the device to locate it correctly relative to the bracket. This method could be adapted to impacting devices having non-circular cross-sections, i.e. of other than cylindrical shape. It should be noted that, compared with Figs. 2a and 2b, the impacting devices have been moved in Fig. 5 (and also in Fig. 6). The devices have in effect been rotated through 90° in the plane of the glass panes, so that the devices are now alongside each other in a horizontal direction, instead of one above the other in a vertical direction. However, this is of no consequence, and either arrangement is possible for any embodiment, it simply being a question of whichever is more convenient.

To assemble the unit, the impacting devices are inserted into the bracket, and the fracturing means thus assembled is inserted between the panes of a double glazed unit at a corner where space has been provided, and slid into position. The bracket 46 of the fracturing means is secured in position by adhesive 49, and wires 34 and trigger system 35 are connected to the impacting devices, all as in previous embodiments. The external pane 42 of the unit is provided with an opaque coating 50 on one surface, preferably the inward-facing surface, to conceal the fracturing means from external view after installation of the window. The coating may, for example, comprise a ceramic ink screen printed and fired onto the surface of the glass.

In some applications it is preferred to employ stepped double glazed units, i.e. units in which one pane is of larger dimension (in one or both directions) than the other, and thus extends beyond the other pane. The use of stepped units allows flush glazing without the need for an unusually deep glazing rebate in the frame. The present invention is equally applicable to such units, it merely being necessary to select a location for the impacting device(s) such that both panes are impacted on actuation of the device(s). One possibility is to position the fracturing means partially between the panes, e.g. so that only the impacting device intended to fracture the smaller pane is actually between the panes. Another possibility is to position both impacting devices inboard of the periphery of the smaller pane. As the location of impact on the larger pane may be further from its edge than in a non-stepped unit, it may be advisable to check the position of the band of net tensile stresses in the pane and align the location of impact accordingly, or to select a higher power impacting device to ensure reliable fracture.

Fig. 6 shows a cross-section of part of a stepped unit 61 installed in a vehicle, e.g. a railway passenger carriage. In this instance, the fracturing means 60 is positioned wholly between the larger external pane 62 and smaller internal pane 63. Details of the fracturing means 60, spacer 64, seal 65, metal bracket 66, apertures 67, impacting devices 68, adhesive 69 and opaque coating 70 are either the same as in previous embodiments, or within the scope of the variations described earlier. The wires 34 are shown only in part for clarity, and it is to be understood that a trigger system is provided as before. A frame 71 incorporating a rebated glazing flange is attached to the external bodywork 72 of the carriage, and the double glazed unit 61 is glazed into the frame 71 by a direct bonding technique employing adhesive 73. The gap between the unit 61 and the external bodywork is filled and sealed by sealant 74, and a trim finisher 75 lends the window an aesthetic appearance from the inside. One function of the trim finisher is to cover the edges of the unit, and especially the fracturing means, thereby concealing it from view from the interior of the carriage. Since the opaque coating 70 conceals the fracturing means from external view, it is then fully concealed. Wiring for the triggering system can also be conveniently concealed behind the trim finisher 75.

While the specific embodiments described above relate to a double glazed window, it will be appreciated that the invention is equally applicable to a triple glazed window, and other multiply glazed windows, simply by increasing the number of impacting devices and brackets comprised in the fracturing means.

A principal advantage of a remotely actuated fracturing system for the glass of an emergency exit is that it permits extensive control of why and when the glass is fractured. At its simplest, trigger system 35 comprises a voltage source and a switch, but far more sophisticated systems are possible. The switch may be in the form of a sensor that detects sudden, unusually large, deceleration or impact (when the emergency exit is fitted to a vehicle), or the heat or smoke of a fire. Such sensors may be arranged to trigger the fracturing means automatically, thereby facilitating escape, or to arm the system and permit a subsequent manual triggering by a passenger or occupant, thereby preventing misuse when no emergency has actually occurred.

In the case of a vehicle, and if the fracturing means is arranged to be automatically triggered on deceleration or impact, it is desirable to arrange for fracture to occur after a short delay (of the order of one or a few seconds) from the moment of deceleration or impact, so that the occupants are retained within the vehicle during the crash, but can escape immediately afterwards. This is believed to maximise the chances of survival, and minimise the severity of injury.

## Claims

1. An emergency exit comprising a double glazed window and an explosively driven fracturing means, characterised in that the window includes at least one pane of tempered glass and a further pane of glass, and the fracturing means is arranged to fracture both panes of glass.

2. An emergency exit as claimed in claim 1, wherein the fracturing means is remotely actuated by transmission of an electrical actuating signal to the fracturing means, and both panes of glass are fractured as the result of a single actuation.

3. An emergency exit as claimed in any preceding claim, wherein the fracturing means is positioned between the two panes of glass, and fractures both panes substantially simultaneously.

4. An emergency exit as claimed in any preceding claim, wherein one of the panes extends beyond the other pane in at least one direction so as to form a step at the edge of the window.

5. An emergency exit as claimed in any preceding claim, wherein the fracturing means is positioned adjacent an edge of the window, preferably adjacent a corner of the window.

6. An emergency exit as claimed in any preceding claim, wherein the fracturing means is concealed from view after installation of the window.

7. An emergency exit as claimed in any preceding claim, wherein the fracturing means is concealed from external view by an opaque coating on a surface of the pane facing the exterior.

8. An emergency exit as claimed in any preceding claim, wherein the fracturing means comprises an explosive impacting device, itself comprising a piston and cylinder, the cylinder containing an explosive charge which, on detonation, causes the piston to extend from the cylinder, the piston thereby impacting on the pane of tempered glass, causing it to fracture.

9. An emergency exit as claimed in claim 3 and claim 8, wherein two explosive impacting devices are positioned in opposed relationship between the panes.

10. An emergency exit as claimed in claim 8 or claim 9, wherein the or each explosive impacting device is an integral part of the double glazed window.

11. An emergency exit as claimed in any preceding claim, wherein both panes are of tempered glass.

12. An emergency exit as claimed in any preceding claim, wherein the maximum dimension of the fracturing means is less than 40 mm, preferably less than 30 mm.

13. An emergency exit as claimed in any preceding claim, wherein the emergency exit is fitted to a vehicle, and the fracturing means is actuated by deceleration or impact of the vehicle.

14. An emergency exit as claimed in claim 13, wherein the vehicle is a railway passenger carriage.

15. A double glazed unit for use as an emergency exit, the unit comprising an explosively driven fracturing means, characterised in that the unit includes at least one pane of tempered glass and a further pane of glass, and the fracturing means is arranged to fracture both panes of glass.
